# EUROPEAN PATENT APPLICATION

(11) **EP 3 683 033 A1**
(43) Date of publication of application: **22.07.2020**
(21) Application number: 20150048.5
(22) Date of filing: 02.01.2020
(51) Int. Cl.: B29C 45/17, B28B 1/24, B29C 45/18

(54) **INJECTION MOLDING APPARATUS AND INJECTION MOLDING METHOD**

(30) Priority: 16.01.2019 TW 108101614
(71) Applicant: Chung Yuan Christian University, Taoyuan City 32023 (TW)
(72) Inventor: CHEN, Shia-Chung, 32023 Taoyuan City (TW); CHANG, Yung-Hsiang, 32023 Taoyuan City (TW); LEE, Kuan-Hua, 32023 Taoyuan City (TW); CHANG, Che-Wei, 32023 Taoyuan City (TW)
(74) Representative: Becker & Kurig Partnerschaft Patentanwälte PartmbB

(57) **Abstract**

An injection molding apparatus including a ceramic powder material injection device, a mold, and a gas providing device is provided. The ceramic powder material injection device is adapted to contain a ceramic powder material. The mold has a molding concavity, wherein the ceramic powder material injection device is adapted to inject at least the ceramic powder material into the molding concavity. The gas providing device is adapted to provide a gas into the molding concavity to increase a pressure in the molding concavity to increase a density of the ceramic powder material in the molding concavity. In addition, an injection molding method is also provided.

## Description

### BACKGROUND OF THE INVENTION

### [Field of the Invention]

The disclosure relates to a molding apparatus and a molding method, and more particularly, to an injection molding apparatus and an injection molding method.

### [Description of Related Art]

With its high productivity and high dimensional complexity, the ceramic powder injection molding technology has received much attention and developed rapidly in recent years. However, the ceramic powder itself lacks fluidity, so it needs to rely on other additives to increase its fluidity. Nonetheless, the improvement to its fluidity through the addition of common additives still fails to meet the process requirements, and defects such as warpage of the product are likely to occur due to insufficient fluidity. In addition, when the product is molded, the product density may be disuniform due to the disuniform distribution of the additives and the ceramic powder, which adversely affects the structural strength of the product.

### SUMMARY OF THE INVENTION

The invention provides an injection molding apparatus and an injection molding method, which can effectively improve the fluidity of the ceramic powder material and uniformize its density.

An injection molding apparatus of the invention includes a ceramic powder material injection device, a mold, and a gas providing device. The ceramic powder material injection device is adapted to contain a ceramic powder material. The mold has a molding concavity. The ceramic powder material injection device is adapted to inject at least the ceramic powder material into the molding concavity. The gas providing device is adapted to provide a gas into the molding concavity to increase a pressure in the molding concavity to increase a density of the ceramic powder material in the molding concavity.

In an embodiment of the invention, the injection molding apparatus includes a fluid providing device. The fluid providing device is adapted to provide a fluid to the ceramic powder material injection device, and the ceramic powder material injection device is adapted to mix the ceramic powder material and the fluid to form a mixed material and inject the mixed material into the molding concavity.

In an embodiment of the invention, the injection molding apparatus includes a pipe and a pressure sensing element. The pipe is connected between the ceramic powder material injection device and the fluid providing device, the fluid providing device is adapted to provide the fluid to the ceramic powder material injection device via the pipe, and the pressure sensing element is arranged at the pipe.

In an embodiment of the invention, the fluid providing device includes a pressure controlling unit, and the pressure controlling unit is adapted to change a pressure of another gas to form the fluid.

In an embodiment of the invention, the fluid providing device includes a temperature controlling unit, and the temperature controlling unit is adapted to heat or cool another gas to form the fluid.

In an embodiment of the invention, the injection molding apparatus includes a pipe and a pressure sensing element. The pipe is connected between the mold and the gas providing device, the gas providing device is adapted to provide the gas to the mold via the pipe, and the pressure sensing element is arranged at the pipe.

An injection molding method of the invention includes the following steps. A ceramic powder material is contained in a ceramic powder material injection device. At least the ceramic powder material is injected into a molding concavity of a mold by the ceramic powder material injection device. A gas is provided into the molding concavity by a gas providing device to increase a pressure in the molding concavity to increase a density of the ceramic powder material in the molding concavity.

In an embodiment of the invention, the injection molding method includes providing a fluid to the ceramic powder material injection device by a fluid providing device, and mixing the ceramic powder material and the fluid to form a mixed material and injecting the mixed material into the molding concavity by the ceramic powder material injection device.

In an embodiment of the invention, the injection molding method includes forming the fluid by changing a pressure of another gas by a pressure controlling unit.

In an embodiment of the invention, the injection molding method includes forming the fluid by heating or cooling another gas by a temperature controlling unit.

Based on the above, in the invention, by increasing the pressure in the molding concavity through the gas providing device, the ceramic powder material can be maintained in a compact state through the high-pressure environment in the injection molding process, so that the density of the ceramic powder material can be uniform and the yield of the process can be improved.

To make the aforementioned more comprehensible, several embodiments accompanied with drawings are described in detail as follows.

### BRIEF DESCRIPTION OF THE DRAWINGS

FIG. 1 is a schematic view of an injection molding apparatus according to an embodiment of the invention.
FIG. 2 is a schematic view of an injection molding apparatus according to another embodiment of the invention.
FIG. 3 is a flowchart of an injection molding method of the injection molding apparatus of FIG. 2.
FIG. 4 is a schematic view of an injection molding apparatus according to another embodiment of the invention.
FIG. 5 is a flowchart of an injection molding method of the injection molding apparatus of FIG. 4.

### DESCRIPTION OF THE EMBODIMENTS

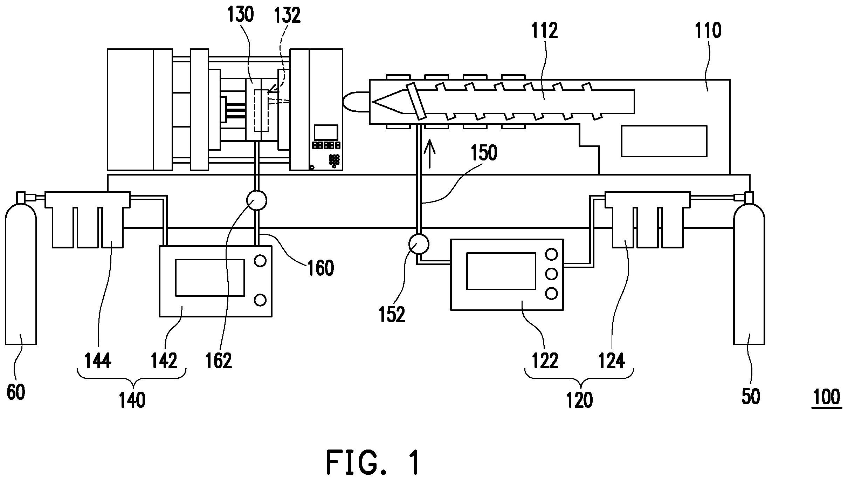

FIG. 1 is a schematic view of an injection molding apparatus according to an embodiment of the invention. Referring to FIG. 1, an injection molding apparatus 100 of the present embodiment includes a ceramic powder material injection device 110, a fluid providing device 120, a mold 130, and a gas providing device 140. The ceramic powder material injection device 110 is adapted to contain a ceramic powder material. It is noted that the ceramic powder material of the present embodiment is not limited to one single ceramic powder particle but refers to the ceramic powder material as a whole formed of a plurality of ceramic powder particles.

The fluid providing device 120 is adapted to provide a supercritical fluid to the ceramic powder material injection device 110. In other embodiments, the fluid providing device 120 is adapted to provide a liquid, a gas or other suitable fluid, and the invention is not limited thereto. The ceramic powder material injection device 110 is adapted to mix the ceramic powder material and the supercritical fluid by a screw rod 112 thereof to form a mixed material and inject the mixed material (i.e., the ceramic powder material and the supercritical fluid) into a molding concavity 132 of the mold 130. The gas providing device 140 is adapted to provide a gas into the molding concavity 132 to increase the pressure in the molding concavity 132 to increase the density of the ceramic powder material in the molding concavity 132. The gas is, for example, an inert gas. After the mixed material is injected into the molding concavity 132 and molded, subsequent processes such as debinding and sintering may be further performed to complete the production of the injection molded product.

By mixing the supercritical fluid in the ceramic powder material as described above, the viscosity of the ceramic powder material can be reduced through the properties of the supercritical fluid to thereby effectively increase the fluidity of the ceramic powder material and reduce the resistance in the injection molding process to improve the yield of the process. In addition, by increasing the pressure in the molding concavity 132 as described above, the ceramic powder material can be maintained in a compact state through the high-pressure environment in the injection molding process, so that the density of the ceramic powder material can be uniform and the yield of the process can be improved.

Specifically, the fluid providing device 120 of the present embodiment includes a pressure controlling unit 122 and a filtering unit 124. The filtering unit 124 is adapted to filter a gas (e.g., an inert gas) from a gas storage unit 50, and the filtered gas is delivered to the pressure controlling unit 122. The pressure controlling unit 122 is adapted to change a pressure of this gas to form the supercritical fluid. Depending on the source gas, the pressure controlling unit 122 may be changed to a temperature controlling unit or a pressure/temperature controlling unit to change both or one of the pressure and temperature of the source gas, and the invention is not limited thereto. In addition, in the case that the supercritical temperature of the source gas is the normal temperature, the temperature controlling unit does not have to change the temperature of the source gas.

On the other hand, the gas providing device 140 of the present embodiment includes a gas injection unit 142 and a filtering unit 144. The filtering unit 144 is adapted to filter a gas (e.g., an inert gas) from a gas storage unit 60, and the filtered gas is delivered to the gas injection unit 142. The gas injection unit 142 is adapted to inject this gas into the mold 130 through a gas counter pressure technique to increase the pressure in the mold 130.

In addition, the injection molding apparatus 100 of the present embodiment includes a pipe 150 and a pressure sensing element 152. The pipe 150 is connected between the ceramic powder material injection device 110 and the fluid providing device 120. The fluid providing device 120 is adapted to provide the supercritical fluid to the ceramic powder material injection device 110 via the pipe 150. The pressure sensing element 152 is arranged at the pipe 150 and may be used to sense a pressure at the time when the gas is injected into the ceramic powder material injection device 110, so that an injection pressure at the time when the fluid providing device 120 injects the gas into the ceramic powder material injection device 110 can be controlled.

Similarly, the injection molding apparatus 100 of the present embodiment includes another pipe 160 and another pressure sensing element 162. The pipe 160 is connected between the mold 130 and the gas providing device 140. The gas providing device 140 is adapted to provide the gas to the mold 130 via the pipe 160. The pressure sensing element 162 is arranged at the pipe 160 and may be used to sense a pressure at the time when the gas is injected into the mold 130, so that an injection pressure at the time when the gas providing device 140 injects the gas into the mold 130 can be controlled.

In other embodiments, the configuration of the gas providing device 140 may be omitted, or the configuration of the fluid providing device 120 may be omitted, and the invention is not limited thereto. Examples of such omissions will be described below with reference to the figures.

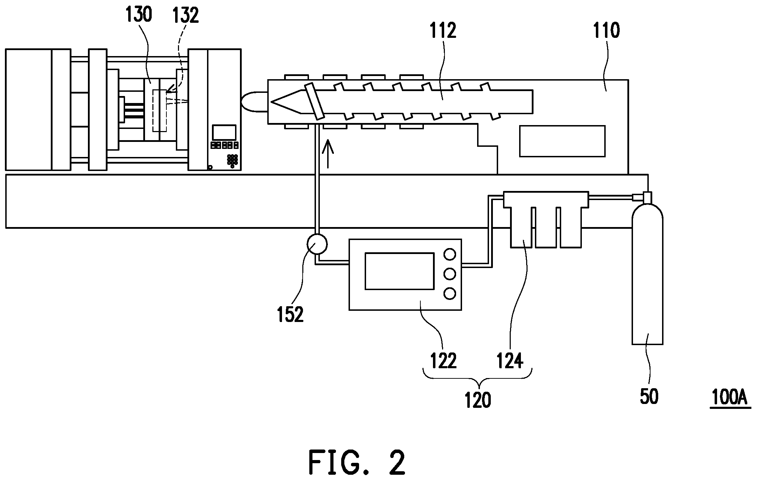

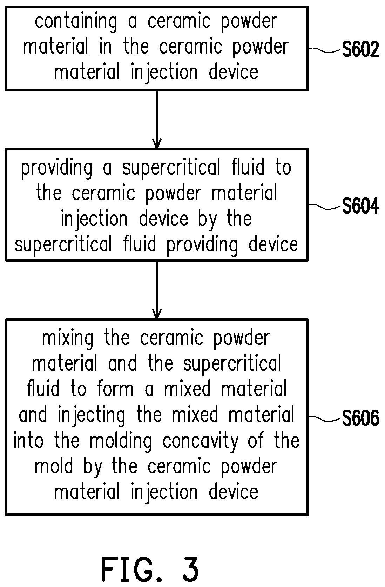

FIG. 2 is a schematic view of an injection molding apparatus according to another embodiment of the invention. FIG. 3 is a flowchart of an injection molding method of the injection molding apparatus of FIG. 2. The difference between an injection molding apparatus 100A shown in FIG. 2 and the injection molding apparatus 100 shown in FIG. 1 lies in that the configuration of the gas providing device 140 is omitted in the embodiment shown in FIG. 2, and the operation process of the fluid providing device 120 therein is the same or similar to the operation process of the fluid providing device 120 of the embodiment shown in FIG. 1, as briefly described below with reference to FIG. 3. First, a ceramic powder material is contained in the ceramic powder material injection device 110 (step S602). Next, a supercritical fluid is provided to the ceramic powder material injection device 110 by the fluid providing device 120 (step S604). The ceramic powder material and the supercritical fluid are mixed to form a mixed material and the mixed material is injected into the molding concavity 132 of the mold 130 by the ceramic powder material injection device 110 (step S606).

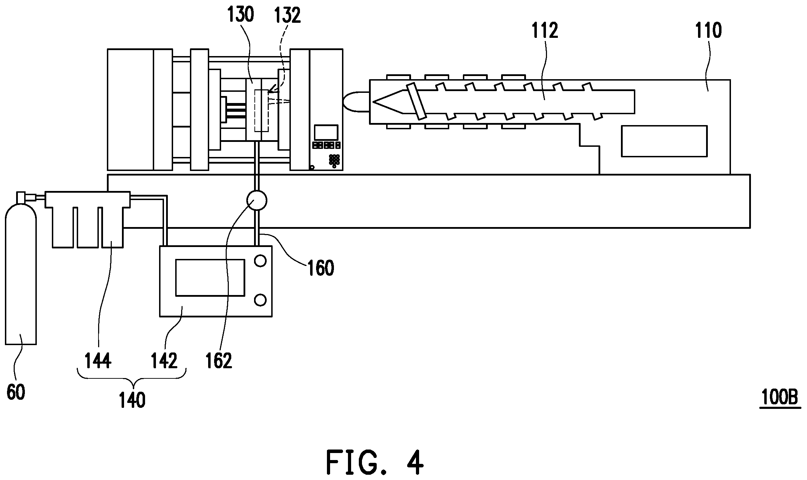

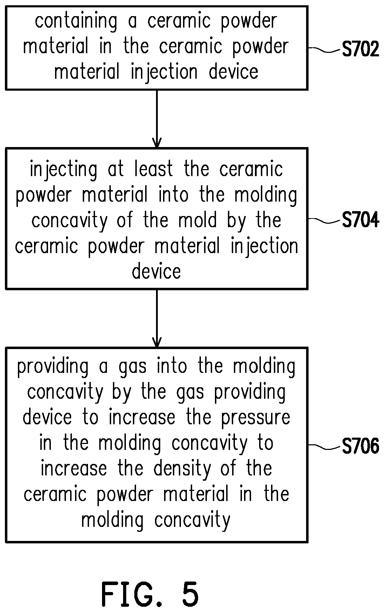

FIG. 4 is a schematic view of an injection molding apparatus according to another embodiment of the invention. FIG. 5 is a flowchart of an injection molding method of the injection molding apparatus of FIG. 4. The difference between an injection molding apparatus 100B shown in FIG. 4 and the injection molding apparatus 100 shown in FIG. 1 lies in that the configuration of the fluid providing device 120 is omitted in the embodiment shown in FIG. 4, and the operation process of the gas providing device 140 therein is the same or similar to the operation process of the gas providing device 140 of the embodiment shown in FIG. 1, as briefly described below with reference to FIG. 5. First, a ceramic powder material is contained in the ceramic powder material injection device 110 (step S702). Next, at least the ceramic powder material is injected into the molding concavity 132 of the mold 130 by the ceramic powder material injection device 110 (step S704). A gas is provided into the molding concavity 132 by the gas providing device 140 to increase the pressure in the molding concavity 132 to increase the density of the ceramic powder material in the molding concavity 132 (step S706).

In summary of the above, in the invention, by increasing the pressure in the molding concavity through the gas providing device, the ceramic powder material can be maintained in a compact state through the high-pressure environment in the injection molding process, so that the density of the ceramic powder material can be uniform and the yield of the process can be improved. In addition, in the invention, by mixing the supercritical fluid in the ceramic powder material, the viscosity of the ceramic powder material can be reduced through the properties of the supercritical fluid to thereby effectively increase the fluidity of the ceramic powder material and reduce the resistance in the injection molding process to further improve the yield of the process.

## Claims

1. An injection molding apparatus (100) comprising:
a ceramic powder material injection device (110) adapted to contain a ceramic powder material;
a mold (130) having a molding concavity (132), wherein the ceramic powder material injection device (110) is adapted to inject at least the ceramic powder material into the molding concavity (132); and
a gas providing device (140) adapted to provide a gas into the molding concavity (132) to increase a pressure in the molding concavity (132) to increase a density of the ceramic powder material in the molding concavity (132).

2. The injection molding apparatus (100) according to claim 1, comprising a fluid providing device (120), wherein the fluid providing device (120) is adapted to provide a fluid to the ceramic powder material injection device (110), and the ceramic powder material injection device (110) is adapted to mix the ceramic powder material and the fluid to form a mixed material and inject the mixed material into the molding concavity (132).

3. The injection molding apparatus (100) according to claim 2, comprising a pipe (150) and a pressure sensing element (152), wherein the pipe (150) is connected between the ceramic powder material injection device (110) and the fluid providing device (120), the fluid providing device (120) is adapted to provide the fluid to the ceramic powder material injection device (110) via the pipe (150), and the pressure sensing element (152) is arranged at the pipe (150).

4. The injection molding apparatus (100) according to claim 2 or 3, wherein the fluid providing device (120) comprises a pressure controlling unit (122), and the pressure controlling unit (122) is adapted to change a pressure of another gas to form the fluid.

5. The injection molding apparatus (100) according to claim 2 or 3, wherein the fluid providing device (120) comprises a temperature controlling unit, and the temperature controlling unit is adapted to heat or cool another gas to form the fluid.

6. The injection molding apparatus (100) according to any one of claims 1 to 5, comprising a pipe (160) and a pressure sensing element (162), wherein the pipe (160) is connected between the mold (130) and the gas providing device (140), the gas providing device (140) is adapted to provide the gas to the mold (130) via the pipe (160), and the pressure sensing element (162) is arranged at the pipe (160).

7. An injection molding method comprising:
containing a ceramic powder material in a ceramic powder material injection device (110);
injecting at least the ceramic powder material into a molding concavity (132) of a mold (130) by the ceramic powder material injection device (110); and
providing a gas into the molding concavity (132) by a gas providing device (140) to increase a pressure in the molding concavity (132) to increase a density of the ceramic powder material in the molding concavity (132).

8. The injection molding method according to claim 7, comprising providing a fluid to the ceramic powder material injection device (110) by a fluid providing device (120), and mixing the ceramic powder material and the fluid to form a mixed material and injecting the mixed material into the molding concavity (132) by the ceramic powder material injection device (110).

9. The injection molding method according to claim 8, comprising forming the fluid by changing a pressure of another gas by a pressure controlling unit (122).

10. The injection molding method according to claim 8, comprising forming the fluid by heating or cooling another gas by a temperature controlling unit.
